# EUROPEAN PATENT SPECIFICATION

(11) **EP 4 299 244 B1**
(45) Date of publication and mention of the grant of the patent: **02.04.2025**
(21) Application number: 22181406.4
(22) Date of filing: 28.06.2022
(51) Int. Cl.: B23Q 17/09, G05B 19/406, G05B 23/02

(54) **TOOLHOLDER, CUTTING TOOL, AND CUTTING TOOL ASSEMBLY**
WERKZEUGHALTER, SCHNEIDWERKZEUG UND SCHNEIDWERKZEUGANORDNUNG
PORTE-OUTIL, OUTIL DE COUPE ET ENSEMBLE OUTIL DE COUPE

(43) Date of publication of application: 03.01.2024
(73) Proprietor: Seco Tools AB, 737 82 Fagersta (SE)
(72) Inventor: JOHANSSON, Daniel, 73782 Fagersta (SE)
(74) Representative: Sandvik

(56) References cited:
- US-A1- 2009 234 490
- US-B2- 10 812 083
- US-B2- 7 341 410

## Description

### TECHNICAL FIELD

The present invention relates to a toolholder, a cutting tool, and a cutting tool assembly.

### BACKGROUND

Within the cutting industry it is becoming more common to use so called smart toolholders which are equipped with different type of sensors for detecting environmental conditions in the cutting process such as vibrations or temperatures. These detected environmental conditions are then transmitted to an external control device where a tool condition such as tool failure, tool wear or other process anomalies are determined based on said detected environmental conditions. Neural networks have been proven successful for analyzing the detected environmental conditions and determining the tool condition. Such a solution is disclosed in e.g. US 7,341,410 B2. US 2009/234490 A1 discloses a tool holder on which the preamble of appended claim 1 is based.

A problem with this type of solution is that due to the hostile machining environment in which the toolholder is provided when used in operation, the shuttling of data between the sensors and the external control device give rise to a significant amount of noise in the sensor signals which reduces the quality of the determination of the tool condition.

### SUMMARY OF THE INVENTION

It is an object of the present invention to overcome, or at least partially overcome, said problem by introducing a toolholder, a cutting tool, and a cutting tool assembly.

The object of the present invention is achieved by means of a toolholder for use with a cutting element in a cutting process, wherein the toolholder comprises:
- a front end;
- a rear end; and
- a longitudinal axis A extending from the front end to the rear end,

wherein the toolholder further comprising:
   - a cutting portion at the front end; and
   - a mounting portion at the rear end; wherein
the cutting portion comprises at least one cutting element interface for receiving a cutting element, and wherein the mounting portion comprises a coupling interface adapted to be coupled to a connecting tool unit; wherein
the toolholder further comprises at least one sensor for detecting an environmental condition; wherein
the toolholder comprises a control unit operatively connected to the at least one sensor, wherein the control unit comprises:
   - a crossbar array of resistive memory devices, and
   - a power source operatively connected to the crossbar array, wherein
the crossbar array comprises a neural network stored thereon, and wherein the neural network is adapted to determine a condition of the cutting element or of the cutting process based on the environmental condition detected by the at least one sensor.

The use of a crossbar array of resistive memory devices as an alternative to conventional central processing units (CPUs) in neural networks has become more interesting during the last years due to their significantly lower power consumption. Resistive memory devices are commonly also known as memristors. Such a crossbar array of resistive memory devices is described in e.g. US 10,812,083 B2.

Due to their lower power consumption, the use of a crossbar array of resistive memory devices makes it possible to arrange the neural network within the toolholder, which is not the case with conventional CPUs since it is not possible to provide the amount of power needed to run this type of conventional CPU into the toolholder during operation.

By arranging the neural network within the toolholder, the need of shuttling data between the sensor and the external control device is eliminated and the determination of the condition of the cutting element or of the cutting process can be made within the toolholder. Thereby, a source of significant noise in the sensor signal is eliminated and the signal quality is improved. By having an improved signal quality, the quality of the determination of the condition of the cutting element or of the cutting process is improved.

The cutting element could be e.g. a cutting insert or a drill bit configured to be mounted in the toolholder.

The cutting process could be e.g. a milling process, a turning, process, a drilling process, or a boring process. The cutting process is preferably a metal cutting process.

The at least one cutting element interface could be e.g. an insert pocket configured to receive a cutting insert.

The environmental condition could be e.g. vibrations, temperatures, forces or sound levels.

The crossbar array of resistive memory devices is to be understood as a plurality of resistive memory devices connected to each other in rows and columns.

The power source is arranged to provide the neural network stored on the crossbar array with enough power for determining the condition of the cutting element or of the cutting process. Preferably, the power source is further arranged to provide the at least one sensor with enough power for detecting the environmental condition. The power source could be e.g. a battery or a generator configured to convert kinetic energy in the toolholder into electrical energy.

The neural network is adapted to determine the condition of the cutting element or of the cutting process by being pre-trained before being implemented at the crossbar array. The pre-training is preferably made outside of the toolholder. The neural network may continuously learn and update itself with obtained environmental data. Alternatively, the neural network is pre-trained based on input from an operator.

The condition of the cutting element could be e.g. tool wear or tool failure. The condition of the cutting process could be e.g. a non-recommended set-up of cutting data parameters, e.g. feed rate, cutting speed or cutting depth; or other process anomalies such as lack of an expected environmental condition from the at least one sensor, e.g. that no input is given from the sensor to the neural network, which could indicate a malfunction of the sensor.

According to an embodiment, the toolholder further comprises a communication device operatively connected to the control unit, wherein the communication device is configured to transmit information from the control unit, wherein the information comprises information regarding the determined condition of the cutting element or of the cutting process.

By providing a communication device operatively connected to the control unit, the determined condition of the cutting element or of the cutting process can be transmitted to external devices, such as computer numerical control (CNC) machines or external computers, during operation of the toolholder. By only transmitting information regarding the determined condition of the cutting element or of the cutting process, the amount of data transmitted outside of the toolholder is significantly reduced compared to the prior art systems where the detected environmental conditions from the at least one sensor need to be constantly transmitted. This is particularly useful in the case where the toolholder is provided with a plurality of sensors since the amount of data to be transmitted outside of the toolholder becomes just a fraction compared to the amount of data generated by the plurality of sensors. Further, since the determination of the cutting element or of the cutting process already has been made when the information is transmitted outside of the toolholder, the impact of the added noise is less severe for the further usage of the determined condition of the cutting element or of the cutting process. Also, the energy consumption of the communication device is reduced. Further, by sending processed data in the form of the determined condition of the cutting element or of the cutting process, the amount of data can be controlled in a way which is not possible when sending all data gathered by the sensors. For example, in some embodiments, the determined condition of the cutting element or of the cutting process may be a binary piece of information indicating whether the tool can be used or not, which can be sent using a very small amount of data.

Preferably, the power source is further configured to provide the communication device with enough power to transmit the information from the control unit.

According to an embodiment, the neural network is adapted to determine if the determined condition of the cutting element or of the cutting process fulfil at least one pre-determined condition, and wherein the communication device is configured to transmit the information from the control unit only if the at least one pre-determined condition is fulfilled.

By only transmitting the information from the control unit when a pre-determined condition is fulfilled, the amount of data transmitted outside of the toolholder is even further reduced. For example, in the case of the determined condition of the cutting element or of the cutting process is an amount of wear of the cutting element, the pre-determined condition could be a threshold value indicating when the wear of the cutting element will have a significant impact on the quality of the cutting process.

According to an embodiment, the communication device is a radio frequency transmitter or an infrared frequency transmitter.

By using a radio frequency transmitter or an infrared frequency transmitter the impact from the hostile environment surrounding the toolholder during operation to the transmitted signal is kept to a minimum since the signal transmitted from these types of transmitters is less sensitive to the noise generated by the hostile environment. Further, these types of transmitters can be made very small which will reduce the energy consumption of the transmitter. These types of transmitters are suitable for use in the toolholder since the amount of data transmitted outside the toolholder is significantly reduced as compared to the prior art systems, as described above.

According to an embodiment, the toolholder comprises an outer circumferential surface extending from the front end to the rear end, and wherein the communication device is arranged at the outer circumferential surface.

By arranging the communication device at the outer circumferential surface, interferences from the toolholder, which is usually made of metal, to the transmitted signal is reduced.

According to an embodiment, the communication device is arranged at the mounting portion.

By arranging the communication device at the mounting portion, the communication device will be placed away from the cutting portion where the environment surrounding the toolholder during operation is as most hostile. Thereby, the amount of noise added to the transmitted signal is reduced. Also, the risk of damaging the communication device is reduced since it is placed away from the cutting portion where the environment surrounding the toolholder during operation is as most hostile.

According to an embodiment, the toolholder comprises a plurality of sensors, wherein the plurality of sensors is configured to detect a plurality of environmental conditions.

By providing the toolholder with a plurality of sensors, the determination of the condition of the cutting element or of the cutting process is further improved since the amount of input to the neural network is increased.

Preferably, the plurality of environmental conditions are different types of environmental conditions. The plurality of sensors could be configured to detect e.g. vibrations, temperatures and sound levels, which combined give an improved indication of the cutting conditions at the cutting element.

According to an embodiment, the plurality of environmental conditions is the same type of environmental condition, e.g. vibrations, detected at different positions at the toolholder.

By detecting the same type of environmental condition at different positions at the toolholder, cutting process conditions such as an uneven amount of wear of the cutting elements, can be determined.

According to an embodiment, the at least one sensor being at least any of an accelerometer, a thermo couple, a piezo electric force sensor, a strain gauge or an acoustic sensor.

According to an embodiment, the condition of the cutting element or of the cutting process is at least any of wear or failure of the cutting element.

By determining wear or failure of the cutting element, the cutting process can be significantly improved since these conditions have a high impact on the cutting process.

According to an embodiment, the at least one sensor is arranged in the cutting portion.

By arranging the at least one sensor in the cutting portion, the distance between the sensor and the cutting element becomes short, which makes the detected environmental condition more representative of the cutting condition at the cutting element.

According to an embodiment, the at least one sensor is arranged in the cutting element interface.

By arranging the at least one sensor in the cutting element interface, the sensor is arranged as close as possible to the cutting element, which makes the detected environmental condition more representative of the cutting condition at the cutting element.

According to an embodiment, the control unit is arranged in the cutting portion.

By arranging the control unit in the cutting portion, the distance between the at least one sensor and the control unit becomes even shorter, which will further reduce the amount of noise in the sensor signal.

According to an embodiment, the control unit is arranged at the coupling interface.

By arranging the control unit at the coupling interface, the control unit will become unexposed to the hostile environment surrounding the toolholder during operation when the toolholder being coupled to the control unit. The control unit thereby becomes protected from being damaged. Further, the implementation of the control unit in the toolholder is facilitated. The coupling interface could be e.g. a female coupling interface configured to be coupled to a male coupling interface at the connecting tool unit. Of course, the coupling interface could also be a male interface configured to be coupled to a female coupling interface at the connecting tool unit, or any other well-known type of coupling interfaces.

According to an embodiment, the toolholder is adapted to be rotated during use in the cutting process, and wherein the power source is adapted to convert kinetic energy resulting from the rotation of the toolholder into electrical energy. According to an embodiment, the power source comprises a generator configured to generate electrical current, wherein the generator is attached to the toolholder. The toolholder further comprises a free rotating disk mounted in the toolholder. The free rotating disk is connected via an axel to the generator. During acceleration and deacceleration of the tool holder the disk and tool holder will have a relative rotational movement. This relative movement is harvested via the generator as electrical current.

By adapting the power source to convert kinetic energy resulting from the rotation of the toolholder into electrical energy, a stable power supply is provided since there is no need of providing any additional electrical energy into the toolholder during operation. Additionally, a more energy efficient system is provided since the energy already generated when using the toolholder in the cutting process is used to also provide the neural network with the energy needed to determine the condition of the cutting element or of the cutting process. Due to the significantly lower energy consumption of the crossbar array, the electric energy being able to be generated from the rotation of the toolholder is enough to provide the neural network with enough power for determining the condition of the cutting element or of the cutting process.

According to an embodiment the power source comprises a generator configured to generate electrical current. The toolholder further comprises at least one coolant channel configured to deliver coolant fluid towards the cutting portion. The coolant channel comprises an impeller which is connected to the generator via an axel. The flow of coolant fluid will pass the impeller and cause a rotational movement of the impeller. The rotational movement of the impeller is harvested as electrical energy by the generator.

By arranging the power source as an energy harvesting device configured to harvest energy from the flow of coolant fluid, energy harvesting can be made also for non-rotational toolholders.

The object of the present invention is further achieved by means of a cutting tool comprising a toolholder as disclosed above and a cutting element, wherein the cutting element is mounted in the cutting element interface.

According to an embodiment, the cutting element interface being an insert pocket, and wherein the cutting element being a cutting insert.

According to an embodiment, the cutting insert is a cubic boron nitride (CBN) cutting insert, a cemented carbide cutting insert, a cermet cutting insert, or a ceramic cutting insert.

The object of the present invention is further achieved by means of a cutting tool assembly comprising a cutting tool as disclosed above, and a connecting tool unit, wherein the cutting tool is coupled to the connecting tool unit via the coupling interface. The coupling interface could be e.g. a female coupling interface configured to be coupled to a male coupling interface at the connecting tool unit.

According to an embodiment, the connecting tool unit being a CNC-machine, wherein the CNC-machine comprises a machine control unit, wherein the machine control unit is arranged to control the CNC-machine, and wherein the machine control unit is operatively connected to a machine communication device, wherein the machine communication device is configured to receive the information transmitted from the communication device, and wherein the machine control unit is configured to control the operation of the CNC-machine based on the information received from the communication unit.

By arranging the connecting tool unit as a CNC-machine as described above, it is possible to adjust the operation of the CNC-machine in response to the condition of the cutting element or of the cutting process determined by the control unit. The cutting process can then be adjusted in real time dependent on the determined condition and the cutting process can thereby be improved.

According to an embodiment, the machine communication device is a radio frequency receiver or an infrared frequency receiver.

### BRIEF DESCRIPTION OF THE DRAWINGS

Figure 1 schematically illustrates a toolholder according to an embodiment of the invention.
Figure 2 schematically illustrates a cutting tool according to an embodiment of the invention.
Figure 3 schematically illustrates a cutting tool assembly according to an embodiment of the invention.
Figure 4 schematically illustrates the communication within the cutting tool assembly illustrated in figure 3.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art, said invention being solely defined by the appended claims. Like reference numbers refer to like elements throughout. The elements illustrated in the drawings are not necessary according to scale. Some elements might have been enlarged in order to clearly illustrate those elements.

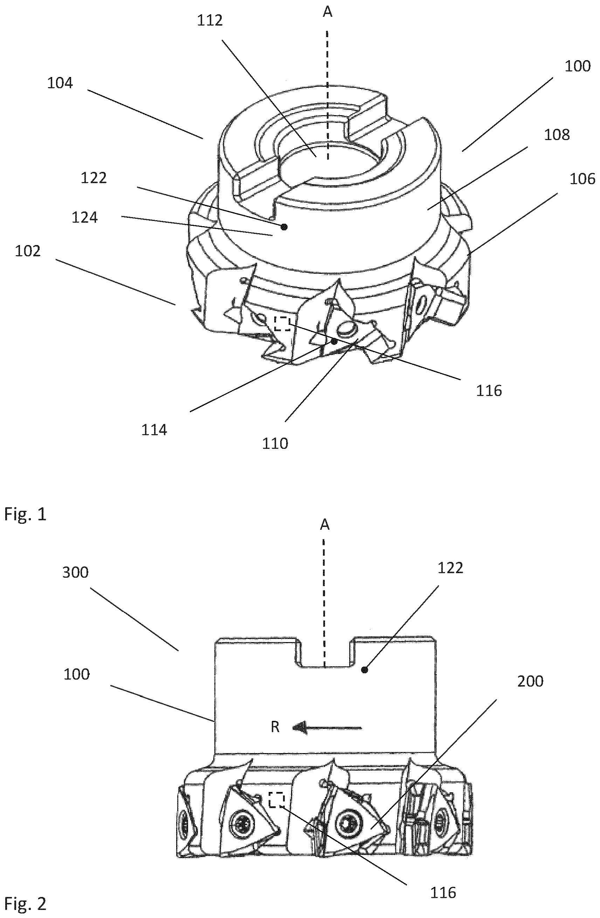

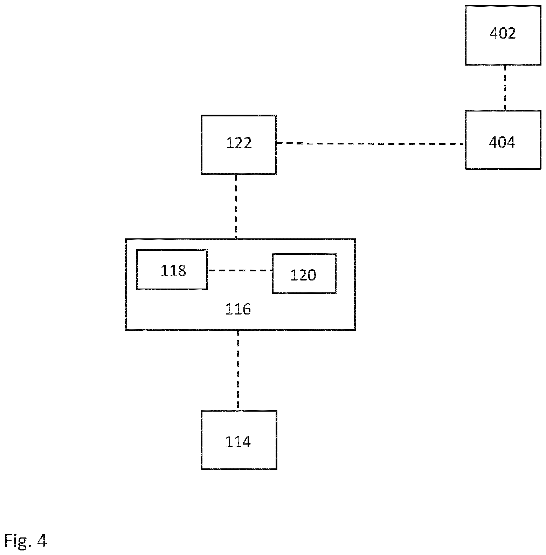

Figure 1 schematically illustrates a toolholder (100) according to an embodiment of the invention. The toolholder being a milling cutter body for use in a milling process. The toolholder (100) comprising:
- a front end (102);
- a rear end (104); and
- a longitudinal axis A extending from the front end (102) to the rear end (104),

wherein the toolholder (100) further comprising:
   - a cutting portion (106) at the front end (102); and
   - a mounting portion (108) at the rear end (104); wherein
the cutting portion (106) comprises a plurality of insert pockets (110) for receiving cutting elements (200) in form of cutting inserts, and wherein the mounting portion (108) comprises a coupling interface (112) adapted to be coupled to a connecting tool unit (400). The coupling interface (112) being a female coupling interface adapted to be coupled to a male coupling interface at the connecting tool unit (400). The toolholder (100) further comprises a sensor (114) arranged in the insert pocket (110) for detecting an environmental condition. The toolholder (100) further comprises a control unit (116) arranged in the cutting part (106). The control unit (116) comprises a crossbar array (118) of resistive memory devices and a power source (120) operatively connected to the crossbar array (118), c.f. figure 4. The crossbar array (118) comprises a neural network stored thereon. The neural network is adapted to determine a condition of the cutting inserts (200) or of the milling process based on the environmental condition detected by the sensor (114). The toolholder (100) further comprises an outer circumferential surface (124) extending from the front end (102) to the rear end (104). The toolholder (100) comprises a communication device (122) arranged at the circumferential surface (124). The communication device (122) is configured to transmit information from the control unit (116), wherein the information comprises information regarding the determined condition of the cutting insert (200) or of the milling process.

Figure 2 schematically illustrates a cutting tool (300) according to an embodiment of the invention. The cutting tool (300) comprises the milling cutter body (100) illustrated in figure 1 and a plurality of cutting inserts (200) mounted in the insert pockets (110). The cutting tool (300) is configured to rotate in the direction R when used in the milling process.

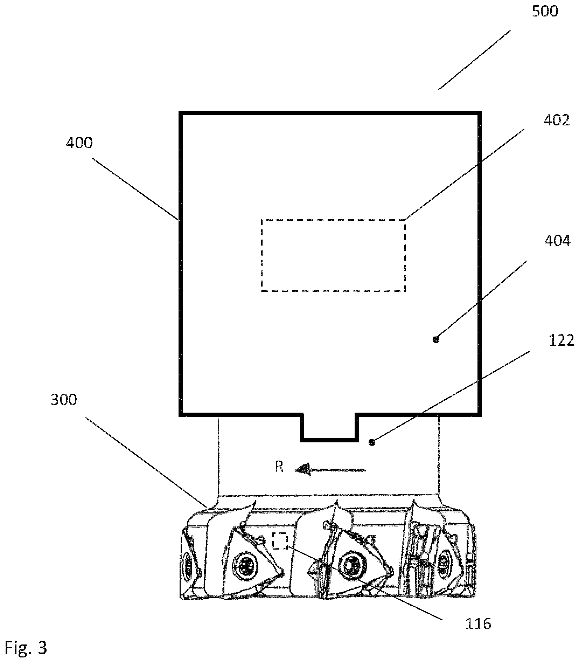

Figure 3 schematically illustrates a cutting tool assembly (500) according to an embodiment of the invention. The cutting tool assembly (500) comprises the cutting tool (300) illustrated in figure 2 and a connecting tool unit (400) in form of a CNC-machine. The cutting tool (300) being coupled to the CNC-machine (400) via the coupling interface (112). The CNC-machine (400) comprises a machine control unit (402) being arranged to control the operation of the CNC-machine (400). The machine control unit (402) is operatively connected to a machine communication device (404). The machine communication device (404) is configured to receive the information transmitted from the communication device (122) and the machine control unit (402) is configured to control the operation of the CNC-machine (400) based on the information received from the communication device (122).

Figure 4 schematically illustrates the communication within the cutting tool assembly illustrated in figure 3. The control unit (116) comprises a crossbar array (118) of resistive memory devices and a power source (120) operatively connected to the crossbar array (118). The control unit (116) is operatively connected to the sensor (114) configured for detecting an environmental condition. The crossbar array (118) comprises a neural network stored thereon, wherein the neural network is adapted to determine a condition of the cutting insert (200) or of the milling process based on the environmental condition detected by the sensor (114). The power source (120) is arranged to provide the neural network stored on the crossbar array (118) with enough power for determining the condition of the cutting insert (200) or of the milling process. The control unit (116) is further operatively connected to the communication device (122), which is configured to transmit information from the control unit (116), wherein the information comprises information regarding the determined condition of the cutting insert (200) or of the milling process. The information transmitted from the communication device (122) is received by the machine communication device (404), which is operatively connected to the machine control unit (402). The machine control unit (402) is configured to control the operation of the CNC-machine (400) based on the information received from the communication device (122).

## Claims

1. Toolholder (100) for use with a cutting element (200) in a cutting process, wherein the toolholder (100) comprises:
- a front end (102);
- a rear end (104); and
- a longitudinal axis (A) extending from the front end (102) to the rear end (104),
wherein the toolholder (100) further comprising:
- a cutting portion (106) at the front end (102); and
- a mounting portion (108) at the rear end (104); wherein
the cutting portion (106) comprises at least one cutting element interface (110) for receiving a cutting element (200) and wherein the mounting portion (108) comprises a coupling interface (112) adapted to be coupled to a connecting tool unit (400); wherein
the toolholder (100) further comprises at least one sensor (114) for detecting an environmental condition;
**characterized in that**
the toolholder (100) comprises a control unit (116) operatively connected to the at least one sensor (114), wherein the control unit (116) comprises:
- a crossbar array (118) of resistive memory devices, and
- a power source (120) operatively connected to the crossbar array (118), wherein the crossbar array (118) comprises a neural network stored thereon, and wherein the neural network is adapted to determine a condition of the cutting element (200) or of the cutting process based on the environmental condition detected by the at least one sensor (114).

2. The toolholder (100) according to claim 1, wherein the toolholder (100) further comprises a communication device (122) operatively connected to the control unit (116), wherein the communication device (122) is configured to transmit information from the control unit (116), wherein the information comprises information regarding the determined condition of the cutting element (200) or of the cutting process.

3. The toolholder (100) according to claim 2, wherein the neural network is adapted to determine if the determined condition of the cutting element (200) or of the cutting process fulfil at least one pre-determined condition, and wherein the communication device (122) is configured to transmit the information from the control unit (116) only if the at least one pre-determined condition is fulfilled.

4. The toolholder (100) according to claim 2 or 3, wherein the communication device (122) is a radio frequency transmitter or an infrared frequency transmitter.

5. The toolholder (100) according to any of claims 2-4, wherein the toolholder (100) comprises an outer circumferential surface (124) extending from the front end (102) to the rear end (104), and wherein the communication device (122) is arranged at the outer circumferential surface (124).

6. The toolholder (100) according to any of claims 2-5, wherein the communication device (122) is arranged at the mounting portion (108).

7. The toolholder (100) according to any of the preceding claims, wherein the toolholder (100) comprises a plurality of sensors (114), wherein the plurality of sensors (114) is configured to detect a plurality of environmental conditions.

8. The toolholder (100) according to any of the preceding claims, wherein the at least one sensor (114) is arranged in the cutting portion (106).

9. The toolholder (100) according to claim 8, wherein the at least one sensor (104) is arranged in the cutting element interface (110).

10. The toolholder (100) according to claim 8 or 9, wherein the control unit (116) is arranged in the cutting portion (106).

11. The toolholder (100) according to any of claims 1-9, wherein the control unit (116) is arranged at the coupling interface (112).

12. The toolholder (100) according to any of the preceding claims, wherein the toolholder (100) is adapted to be rotated during use in the cutting process, and wherein the power source (120) is adapted to convert kinetic energy resulting from the rotation of the toolholder (100) into electrical energy.

13. A cutting tool (300) comprising:
- a toolholder (100) according to any of claims 1-12; and
- a cutting element (200), wherein
the cutting element is mounted in the cutting element interface (110).

14. A cutting tool assembly (500) comprising:
- a cutting tool (300) according to claim 13; and
- a connecting tool unit (400), wherein
the cutting tool (300) is coupled to the connecting tool unit (400) via the coupling interface (112).

15. The cutting tool assembly (500) according to claim 14, wherein the connecting tool unit (400) is a computer numerical control machine, wherein the computer numerical control machine (400) comprises a machine control unit (402), wherein the machine control unit (402) is arranged to control the computer numerical control machine (400), and wherein the machine control unit (402) is operatively connected to a machine communication device (404), wherein the machine communication device (404) is configured to receive the information transmitted from the communication device (122), and wherein the machine control unit (402) is configured to control the operation of the computer numerical control machine (400) based on the information received from the communication device (122).

## Patentansprüche

1. Werkzeughalter (100) zur Verwendung mit einem Schneidelement (200) in einem Schneidprozess, wobei der Werkzeughalter (100) Folgendes aufweist:
- ein vorderes Ende (102),
- ein hinteres Ende (104) und
- eine Längsachse (A), die sich vom vorderen Ende (102) zum hinteren Ende (104) erstreckt,
wobei der Werkzeughalter (100) ferner Folgendes aufweist:
einen Schneidabschnitt (106) am vorderen Ende (102) und
einen Befestigungsabschnitt (108) am hinteren Ende (104), wobei der Schneidabschnitt (106) wenigstens einen Schneidelementbereich (110) zur Aufnahme eines Schneidelements (200) aufweist, und wobei der Befestigungsabschnitt (108) einen Kopplungsbereich (112) aufweist, der so ausgelegt ist, dass er mit einer verbindenden Werkzeugeinheit (400) gekoppelt werden kann, wobei
der Werkzeughalter (100) ferner wenigstens einen Sensor (114) zum Erfassen eines Umgebungszustands aufweist,
**dadurch gekennzeichnet, dass**
der Werkzeughalter (100) eine Steuereinheit (116) aufweist, die mit dem wenigstens einen Sensor (114) funktionell verbunden ist, wobei die Steuereinheit (116) Folgendes aufweist:
- eine Crossbar-Matrix (118) resistiver Speichervorrichtungen und
- eine Stromquelle (120), die funktionell mit der Crossbar-Matrix (118) verbunden ist, wobei
die Crossbar-Matrix (118) ein darauf gespeichertes neuronales Netz aufweist, und wobei das neuronale Netz zur Feststellung eines Zustandes des Schneidelements (200) oder des Schneidvorgangs auf der Grundlage des von dem wenigstens einen Sensor (114) erfassten Umgebungszustands eingerichtet ist.

2. Werkzeughalter (100) gemäß Anspruch 1, wobei der Werkzeughalter (100) ferner eine Kommunikationsvorrichtung (122) aufweist, die funktionell mit der Steuereinheit (116) verbunden ist, wobei die Kommunikationsvorrichtung (122) zur Übertragung von Informationen von der Steuereinheit (116) eingerichtet ist, wobei die Informationen solche Informationen umfassen, die einen Bezug zu dem festgestellten Zustand des Schneidelements (200) oder des Schneidprozesses aufweisen.

3. Werkzeughalter (100) nach Anspruch 2, wobei das neuronale Netz für die Feststellung, ob der festgestellte Zustand des Schneidelements (200) oder des Schneidprozesses wenigstens eine vorgegebene Bedingung erfüllt, eingerichtet ist, und wobei die Kommunikationseinrichtung (122) so eingerichtet ist, das sie die Information von der Steuereinheit (116) nur dann überträgt, wenn der wenigstens eine vorgegebene Zustand erfüllt ist.

4. Werkzeughalter (100) nach Anspruch 2 oder 3, wobei die Kommunikationsvorrichtung (122) ein Hochfrequenzsender oder ein Infrarotfrequenzsender ist.

5. Werkzeughalter (100) nach einem der Ansprüche 2 bis 4, wobei der Werkzeughalter (100) eine äußere Umfangsfläche (124) aufweist, die sich vom vorderen Ende (102) zum hinteren Ende (104) erstreckt, und wobei die Kommunikationsvorrichtung (122) an der äußeren Umfangsfläche (124) angeordnet ist.

6. Werkzeughalter (100) nach einem der Ansprüche 2 bis 5, wobei die Kommunikationsvorrichtung (122) an dem Befestigungsabschnitt (108) angeordnet ist.

7. Werkzeughalter (100) nach einem der vorstehenden Ansprüche, wobei der Werkzeughalter (100) mehrere Sensoren (114) aufweist, wobei die mehreren Sensoren (114) zur Erfassung mehrerer Umgebungszustände eingerichtet sind.

8. Werkzeughalter (100) gemäß einem der vorstehenden Ansprüche, wobei der wenigstens eine Sensor (114) im Schneidabschnitt (106) angeordnet ist.

9. Werkzeughalter (100) gemäß Anspruch 8, wobei der wenigstens eine Sensor (104) im Schneidelementbereich (110) angeordnet ist.

10. Werkzeughalter (100) nach Anspruch 8 oder 9, wobei die Steuereinheit (116) im Schneidabschnitt (106) angeordnet ist.

11. Werkzeughalter (100) nach einem der Ansprüche 1 bis 9, wobei die Steuereinheit (116) am Kopplungsbereich (112) angeordnet ist.

12. Werkzeughalter (100) nach einem der vorstehenden Ansprüche, wobei der Werkzeughalter (100) so ausgelegt ist, dass er während der Verwendung im Schneidprozess rotiert werden kann, und wobei die Stromquelle (120) so ausgelegt ist, dass sie die aus der Rotation des Werkzeughalters (100) resultierende kinetische Energie in elektrische Energie umwandelt.

13. Schneidwerkzeug (300), das Folgendes aufweist:
- einen Werkzeughalter (100) gemäß einem der Ansprüche 1 bis 12, und
- ein Schneidelement (200), wobei
das Schneidelement im Schneidelementbereich (110) montiert ist.

14. Schneidwerkzeuganordnung (500), die Folgendes aufweist:
- ein Schneidwerkzeug (300) gemäß Anspruch 13 und
- eine verbindende Werkzeugeinheit (400), wobei
das Schneidwerkzeug (300) über den Kopplungsbereich (112) mit der verbindenden Werkzeugeinheit (400) gekoppelt ist.

15. Schneidwerkzeuganordnung (500) gemäß Anspruch 14, wobei die verbindende Werkzeugeinheit (400) eine CNC-Maschine ist, wobei die CNC-Maschine (400) eine Maschinensteuereinheit (402) aufweist, wobei die Maschinensteuereinheit (402) so angeordnet ist, dass sie die CNC-Maschine (400) steuert, und wobei die Maschinensteuereinheit (402) operativ mit einer Maschinen-Kommunikationsvorrichtung (404) verbunden ist, wobei die Maschinen-Kommunikationsvorrichtung (404) für den Empfang von der Kommunikationsvorrichtung (122) gesendeter Informationen eingerichtet ist, und wobei die Maschinensteuereinheit (402) zum Steuern des Betriebs der CNC-Maschine (400) auf der Grundlage der von der Kommunikationsvorrichtung (122) empfangenen Informationen eingerichtet ist.

## Revendications

1. Porte-outil (100) destiné à être utilisé avec un élément de coupe (200) dans un procédé de coupe, où le porte-outil (100) comprend :
- une extrémité avant (102) ;
- une extrémité arrière (104) ; et
- un axe longitudinal (A) s'étendant de l'extrémité avant (102) à l'extrémité arrière (104),
où le porte-outil (100) comprend en outre :
- une partie de coupe (106) au niveau de l'extrémité avant (102) ; et
- une partie de montage (108) au niveau de l'extrémité arrière (104) ; où
la partie de coupe (106) comprend au moins une interface d'élément de coupe (110) destinée à recevoir un élément de coupe (200) et où la partie de montage (108) comprend une interface d'accouplement (112) conçue pour être couplée à une unité d'outil de liaison (400) ; où
le porte-outil (100) comprend en outre au moins un capteur (114) destiné à détecter une condition environnementale ;
**caractérisé en ce que**
le porte-outil (100) comprend une unité de commande (116) fonctionnellement reliée au au moins un capteur (114), où l'unité de commande (116) comprend :
- un réseau crossbar (118) de dispositifs de mémoire résistive, et
- une source d'alimentation (120) fonctionnellement reliée au réseau crossbar (118), où le réseau crossbar (118) comprend un réseau neuronal mémorisé sur celui-ci, et où le réseau neuronal est conçu pour déterminer une condition de l'élément de coupe (200) ou du procédé de coupe sur la base de la condition environnementale détectée par le au moins un capteur (114).

2. Porte-outil (100) selon la revendication 1, où le porte-outil (100) comprend en outre un dispositif de communication (122) fonctionnellement relié à l'unité de commande (116), où le dispositif de communication (122) est configuré pour transmettre des informations émanant de l'unité de commande (116), où les informations comprennent des informations concernant la condition déterminée de l'élément de coupe (200) ou du procédé de coupe.

3. Porte-outil (100) selon la revendication 2, dans lequel le réseau neuronal est conçu pour déterminer si la condition déterminée de l'élément de coupe (200) ou du procédé de coupe remplit au moins une condition prédéterminée, et où le dispositif de communication (122) est configuré pour transmettre les informations émanant de l'unité de commande (116) seulement si la au moins une condition prédéterminée est remplie.

4. Porte-outil (100) selon la revendication 2 ou 3, dans lequel le dispositif de communication (122) est un émetteur de fréquence radioélectrique ou un émetteur de fréquence infrarouge.

5. Porte-outil (100) selon l'une quelconque des revendications 2 à 4, où le porte-outil (100) comprend une surface circonférentielle extérieure (124) s'étendant de l'extrémité avant (102) à l'extrémité arrière (104), et où le dispositif de communication (122) est agencé au niveau de la surface circonférentielle extérieure (124).

6. Porte-outil (100) selon l'une quelconque des revendications 2 à 5, dans lequel le dispositif de communication (122) est agencé au niveau de la partie de montage (108).

7. Porte-outil (100) selon l'une quelconque des revendications précédentes, où le porte-outil (100) comprend une pluralité de capteurs (114), où la pluralité de capteurs (114) est configurée pour détecter une pluralité de conditions environnementales.

8. Porte-outil (100) selon l'une quelconque des revendications précédentes, dans lequel le au moins un capteur (114) est agencé dans la partie de coupe (106).

9. Porte-outil (100) selon la revendication 8, dans lequel le au moins un capteur (114) est agencé dans l'interface d'élément de coupe (110).

10. Porte-outil (100) selon la revendication 8 ou 9, dans lequel l'unité de commande (116) est agencée dans la partie de coupe (106).

11. Porte-outil (100) selon l'une quelconque des revendications 1 à 9, dans lequel l'unité de commande (116) est agencée au niveau de l'interface d'accouplement (112).

12. Porte-outil (100) selon l'une quelconque des revendications précédentes, où le porte-outil (100) est conçu pour être entraîné en rotation durant une utilisation dans le procédé de coupe, et où la source d'alimentation (120) est conçue pour convertir l'énergie cinétique résultant de la rotation du porte-outil (100) en énergie électrique.

13. Outil de coupe (300) comprenant :
- un porte-outil (100) selon l'une quelconque des revendications 1 à 12 ; et
- un élément de coupe (200), où
l'élément de coupe est monté dans l'interface d'élément de coupe (110).

14. Ensemble d'outil de coupe (500) comprenant
- un outil de coupe (300) selon la revendication 13 ; et
- une unité d'outil de liaison (400), où
l'outil de coupe (300) est couplé à l'unité d'outil de liaison (400) via l'interface d'accouplement (112).

15. Ensemble d'outil de coupe (500) selon la revendication 14, dans lequel l'unité d'outil de liaison (400) est une machine à commande numérique par ordinateur, où la machine à commande numérique par ordinateur (400) comprend une unité de commande de machine (402), où l'unité de commande de machine (402) est agencée pour commander la machine à commande numérique par ordinateur (400), et où l'unité de commande de machine (402) est fonctionnellement reliée à un dispositif de communication de machine (404), où le dispositif de communication de machine (404) est configuré pour recevoir les informations transmises par le dispositif de communication (122), et où l'unité de commande de machine (402) est configurée pour commander le fonctionnement de la machine à commande numérique par ordinateur (400) sur la base des informations reçues du dispositif de communication (122).
